# DEMANDE DE BREVET EUROPEEN

(11) **EP 1 914 992 A1**
(43) Date de publication de la demande: **23.04.2008**
(21) Numéro de dépôt: 07118370.1
(22) Date de dépôt: 12.10.2007
(51) Int. Cl.: H04N 7/18

(54) **Système d'observation et de transmission d'images notamment pour drone naval de surface, et drone naval associé**

(30) Priorité: 19.10.2006 FR 0654376
(71) Demandeur: ECA, 83130 La Garde (FR)
(72) Inventeur: Vergne, Jean-Philippe, 83000 Toulon (FR); Jaume, David Georges, 83220 Le Pradet (FR)
(74) Mandataire: Casalonga, Axel

(57) **Abrégé**

Le système d'observation et de transmission d'images pour drone naval de surface comprend un dispositif d'observation 24 pourvu d'un plateau 35 de support, d'un ensemble optronique 32 qui comporte une pluralité de caméras 34 montées sur le plateau 35 de support, et d'une unité centrale de gestion de l'ensemble optronique 32. L'unité centrale de gestion est apte à commander les caméras 34 selon différents modes de surveillance.

## Description

La présente invention concerne le domaine de l'observation et de la formation d'images à partir d'un véhicule de surface inhabité qui est notamment destiné à des applications maritimes.

Plus particulièrement, l'invention concerne le domaine des drones navals de surface commandés à distance par un opérateur qui comprennent des systèmes pour permettre une observation et une transmission d'images de gerbes d'eau qui sont obtenues lors de tirs de projectiles réalisés à partir d'un navire de surface.

En effet, afin de pouvoir étudier la qualité et la précision de tirs de projectibles sur des cibles, il est nécessaire de pouvoir observer et transmettre les images de ces tirs, et notamment des gerbes d'eau qui se forment après les impacts sur les cibles.

A cet égard, on utilise généralement un drone naval de surface commandé à distance pour permettre cette observation sans mise en danger de personnel.

Les images collectées sont ensuite analysées en toute sécurité dans un centre prévu à cet effet qui peut par exemple être situé sur le navire de surface, ou encore à terre.

Un tel drone naval de surface comporte classiquement un corps, des moyens de propulsion, et un système d'observation et de transmission d'images monté sur le corps. Le système d'observation et de transmission d'images comporte généralement une caméra articulée à rotation pour effectuer une surveillance sur 360° à une distance prédéterminée du drone.

Ce système présente l'inconvénient de nécessiter un démontage fréquent de l'articulation de la caméra qui a tendance à s'user relativement rapidement. Dès lors, cette usure peut nuire à la fiabilité de fonctionnement du système d'observation et de transmission d'images, et à celle du drone sur lequel il est monté. Il est donc nécessaire de prévoir des opérations de maintenance régulières.

La présente invention a donc pour but de remédier à ces inconvénients.

Plus particulièrement, le but de l'invention est de fournir un système d'observation et de transmission d'images, notamment pour drone naval de surface, qui soit particulièrement fiable, robuste et facile à monter.

Selon un premier aspect, l'invention a pour objet un système d'observation et de transmission d'images pour drone naval de surface comprenant un dispositif d'observation pourvu d'un plateau de support, d'un ensemble optronique qui comporte une pluralité de caméras montées sur le plateau de support, et d'une unité centrale de gestion de l'ensemble optronique.

L'unité centrale de gestion est apte à commander, dans un premier mode de surveillance, l'ensemble des caméras pour obtenir une surveillance sur 360° à une première distance du système, et apte à commander, dans un second mode de surveillance, un nombre réduit de caméras pour obtenir une surveillance sur une plage angulaire réduite à une seconde distance du système.

Avec un tel dispositif d'observation pourvu d'une pluralité de caméras réparties sur le plateau de support, il n'est plus nécessaire de prévoir une ou des caméras mobiles à rotation, ce qui limite sensiblement les éventuelles usures de fonctionnement.

En outre, avec un tel dispositif d'observation, il est possible de réaliser l'observation et la transmission d'images dans différentes plages angulaires situées à différentes distances du drone.

En effet, l'ensemble optronique est prévu pour la surveillance d'une première zone située dans une première plage angulaire et à une première distance du drone, et d'une seconde zone située dans une seconde plage angulaire et à une seconde distance du drone.

Ainsi, ce dispositif peut assurer une surveillance suivant différents modes d'exploitation sans qu'il soit nécessaire de prévoir un ajout de caméras ou encore des changements des éléments optiques de celles-ci.

Avantageusement, les caméras sont circonférentiellement régulièrement réparties sur le plateau de support.

Dans un mode de réalisation, les caméras sont montées fixement sur le plateau de support.

Avantageusement, le dispositif d'observation comprend une embase de fixation et une articulation gyrostabilisée disposée entre l'embase de fixation et le plateau de support.

Avantageusement, l'unité centrale de gestion de l'ensemble optronique est montée sur le plateau de support. Ainsi, la longueur des câbles de connexion reliant les caméras à l'unité centrale de gestion est relativement courte.

De préférence, le système comprend un coffret de transmission supportant le dispositif d'observation et apte à permettre le montage du système sur un élément extérieur audit système.

Avantageusement, le dispositif comprend un capteur de cap par exemple magnétique décalé axialement par rapport aux caméras, du côté opposé au plateau de support.

Le dispositif d'observation peut être pourvu en outre d'un capot de protection translucide monté sur l'embase de fixation. Le capot permet de protéger l'ensemble optronique et l'unité centrale de gestion de divers agents extérieurs polluants pouvant engendrer un éventuel dysfonctionnement.

Avantageusement, le dispositif d'observation comprend au moins une antenne de transmission des images de navigation apte à être déployée.

Lorsque le mât est démonté, les antennes peuvent donc être rangées le long de celui-ci afin de réduire son encombrement.

Dans un mode de réalisation, le système comprend une caméra de navigation destinée à être montée sur un moyen de support du système d'observation et de transmission d'images.

Selon un second aspect, l'invention a pour objet un drone naval de surface pourvu d'un corps, d'un système d'observation et de transmission d'images, et d'un moyen de support dudit système d'observation et de transmission d'images. Le système d'observation et de transmission d'images comprend un dispositif d'observation pourvu d'un plateau de support, d'un ensemble optronique qui comporte une pluralité de caméras montées sur le plateau de support, et d'une unité centrale de gestion de l'ensemble optronique, dans lequel l'unité centrale de gestion est apte à commander, dans un premier mode de surveillance, l'ensemble des caméras pour obtenir une surveillance sur 360° à une première distance du système, et apte à commander, dans un second mode de surveillance, un nombre réduit de caméras pour obtenir une surveillance sur une plage angulaire réduite à une seconde distance du système.

Avantageusement, le moyen de support est constitué par un mât monté sur le corps.

Avec une telle conception du moyen de support, il devient dès lors possible d'obtenir un drone naval de surface qui soit particulièrement facile à monter et économique.

En effet, l'utilisation d'un unique mât pour réaliser le support du système d'observation et de transmission d'images permet un assemblage rapide des éléments du drone.

En d'autres termes, la prévision d'un moyen de support constitué par un unique élément permet de s'affranchir de contraintes de montage longues pouvant se révéler particulièrement onéreuses.

Par ailleurs, l'utilisation d'un unique élément pour réaliser le montage sur le corps du drone du système d'observation et de transmission d'images permet d'obtenir un support qui est moins sensible aux vibrations pouvant être générées lors des mouvements de houle. Le moyen de support est donc plus léger et moins coûteux.

Avantageusement, le drone comprend en outre des moyens de maintien en position du mât.

Dans un mode de réalisation, ces moyens de maintien en position comprennent des câbles et des éléments tendeurs des câbles.

Ainsi, le mât de support peut être maintenu dans une position parfaitement verticale, et ce, même dans des conditions de navigation relativement difficiles.

En effet, les moyens de maintien en position, et notamment les câbles et les éléments tendeurs de câbles, permettent de contraindre le mât de support, ce qui limite sensiblement un éventuel risque de fléchissement lors de fortes rafales de vent et/ou d'une mer agitée.

Préférentiellement, le mât est monté de manière amovible sur le corps. Ainsi, il peut être monté ou démonté, de façon rapide et aisée. Après démontage du mât, il est donc possible d'utiliser le corps du drone pour une autre application. On dispose ainsi d'un bateau pouvant permettre le transport de personnes ou d'équipements.

Le drone peut donc être transformé pour être dédié au transport. Ensuite, en montant à nouveau le mât pourvu du système d'observation et de transmission sur le corps, on obtient de nouveau un drone apte à être utilisé pour observer et transmettre les images de tirs. On dispose ainsi d'un drone convertible en fonction de l'application pour laquelle il est destiné, qui peut être obtenu à partir d'un bateau semi-rigide de type à moteur hors-bord ou en bord. Pour une application dédiée au transport, on conçoit aisément que le corps du drone est commandé directement à bord.

L'invention concerne enfin un procédé d'observation et de transmission d'images, notamment à partir d'un drone naval de surface, dans lequel on utilise une pluralité de caméras montées sur un plateau de support, on commande, dans un premier mode de surveillance, l'ensemble des caméras pour obtenir une surveillance sur 360° à une première distance du système, et on commande, dans un second mode de surveillance, un nombre réduit de caméras pour obtenir une surveillance sur une plage angulaire réduite à une seconde distance du système.

La présente invention sera mieux comprise à la lecture de la description détaillée d'un mode de réalisation pris à titre d'exemple nullement limitatif et illustré par les dessins annexés, sur lesquels :
- les figures 1 et 2 sont des vues schématiques qui illustrent un drone naval de surface selon l'invention ;
- la figure 3 est une vue en perspective d'un système d'observation et de transmission d'images du drone des figures 1 et 2.

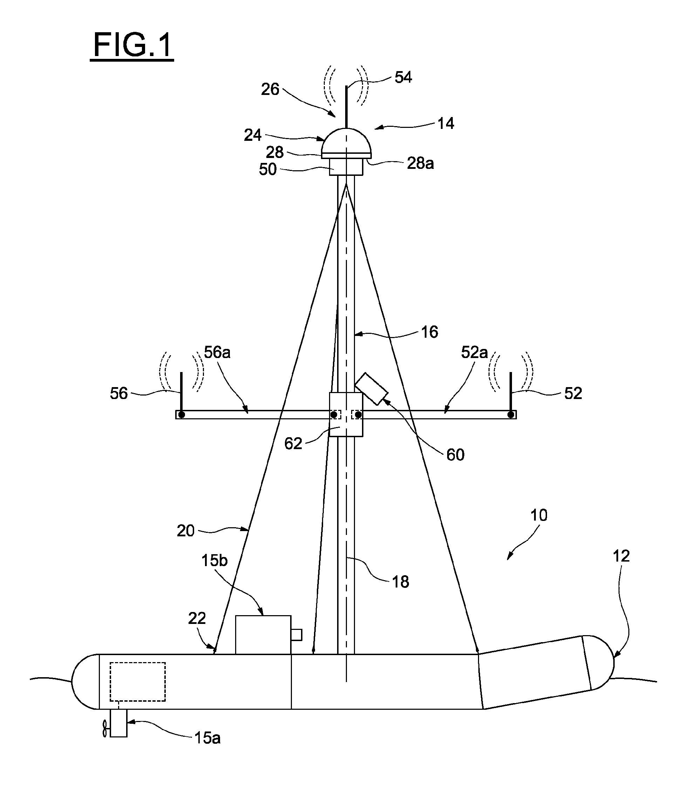

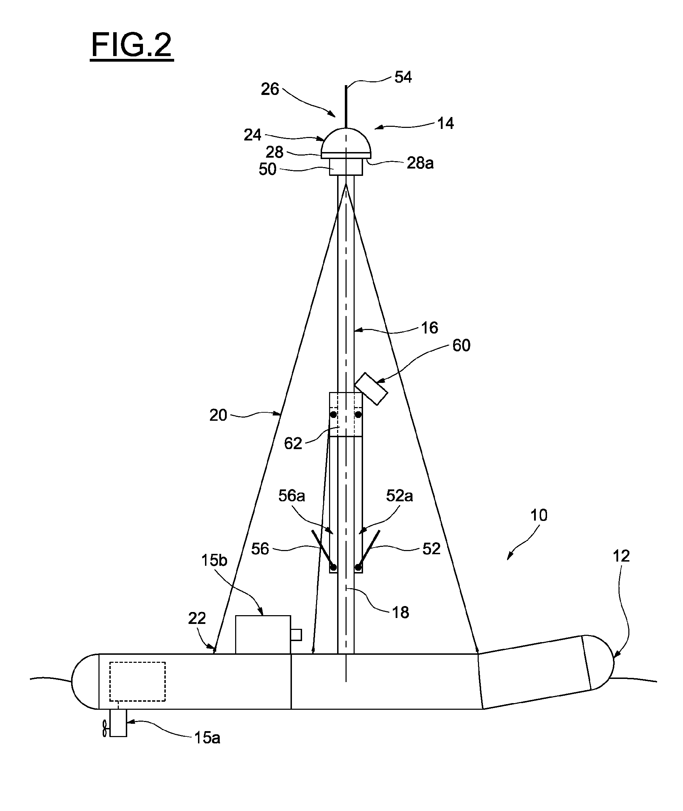

Sur les figures 1 et 2, on a représenté un drone naval de surface désigné par la référence numérique générale 10.

Il est destiné à être utilisé pour observer et transmettre des images de tirs réalisés à partir d'un autre navire de surface. Toutefois, on conçoit que le drone 10 puisse également être utilisé dans d'autres applications.

Le drone 10 de surface est notamment pourvu d'un corps 12, de forme générale allongée, d'un système 14 d'observation et de transmission d'images en vue d'une transmission vers un centre d'enregistrement et de dépouillement (non illustré) qui permettra d'analyser la qualité des tirs effectués, de moyens de propulsion 15a pour le déplacement du drone, et d'une unité de commande 15b de propulsion. L'unité de commande 15b comporte notamment des moyens de détermination de la position du drone 10 et des moyens de commande des moyens de propulsion 15a.

Pour permettre le positionnement du système 14 d'observation et de transmission d'images relativement au corps 12, le drone 10 comprend également un mât 16, d'axe géométrique 18 supposé vertical, qui est monté sur le corps 12.

Le mât 16 est monté sur le corps 12 de manière à s'étendre sensiblement perpendiculairement par rapport à celui-ci. I1 présente, en section droite, un profil général elliptique. Bien entendu, il est également envisageable de prévoir un mât qui présente un autre type de profil, par exemple rectangulaire, ou encore circulaire.

Afin d'obtenir un mât 16 présentant une bonne rigidité, il est possible de prévoir un mât 16 creux et d'utiliser un matériau léger, tel que l'aluminium. Le mât 16 peut également avantageusement être anodisé afin d'obtenir une protection anti-corrosion. La hauteur du mât 16 peut être de l'ordre du mètre, et est généralement comprise entre 4 et 6 mètres. Le mât 16 peut être de même type que ceux utilisés sur un voilier.

Pour assurer un montage et un démontage aisé du mât 16, celui-ci est disposé sur le corps 12 de manière amovible. A cet égard, le corps 12 du drone comprend une embase (non représentée) rapportée sur le corps 12 et à l'intérieur de laquelle est destinée à être logée une extrémité inférieure du mât 16.

Avantageusement, l'embase présente une forme générale en U et comprend deux rainures symétriques inclinées prévues chacune sur une des ailes du U. Les rainures sont adaptées pour coopérer avec des tourillons (non représentés) du mât 16 pour permettre un passage rapide de celui-ci d'une position horizontale à une position verticale, et inversement.

On obtient ainsi un mât 16 qui peut facilement être monté ou démonté sur le corps 12. En variante, le mât 16 peut bien entendu être monté sur le corps 12 par tout autre moyen approprié.

Pour assurer un maintien en position verticale du mât 16, le drone 10 comprend également des câbles 20 montés obliquement entre le corps 12 et le mât 16. Les câbles 20 peuvent avantageusement être des haubans. Les câbles 20 sont ici au nombre de trois. Ils sont associés à des éléments tendeurs 22, par exemple des ridoirs gradués reliés au corps 12, de manière à faire varier la tension des câbles 20. Avantageusement, il est possible de prévoir sur un des câbles 20, un palan (non représenté) pour contribuer au blocage du mât 16 en position verticale.

En d'autres termes, l'unique mât 16 constitue un moyen de support du système 14 d'observation et de transmission, les câbles 20 et les éléments tendeurs 22 formant, quant à eux, des moyens de maintien en position verticale dudit mât.

Le système 14 d'observation et de transmission comprend essentiellement un dispositif d'observation 24 monté à une extrémité supérieure du mât 16 et comportant notamment des moyens 26 pour la transmission des images observées par le dispositif 24.

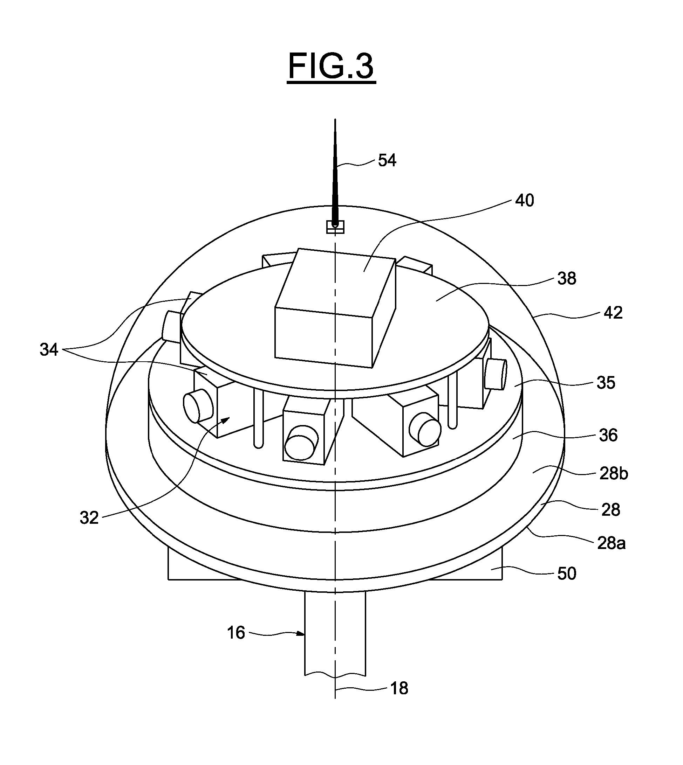

Comme illustré plus visiblement sur la figure 3, le dispositif d'observation 24 comporte une embase 28 de fixation centrée sur l'axe 18 et un ensemble optronique 32 monté sur l'embase 28 de fixation en vue de l'observation et de l'analyse des tirs réalisés.

L'embase 28 de fixation est réalisée en aluminium. Elle présente ici une forme générale de disque et est délimitée axialement par des surfaces inférieure 28a et supérieure 28b. La surface inférieure 28a permet d'assujettir le dispositif d'observation 24 à l'extrémité supérieure du mât 16. La surface supérieure 28b permet, quant à elle, le support de l'ensemble optronique 32.

L'ensemble optronique 32 permet de réaliser l'observation de plusieurs zones à visualiser qui peuvent être situées dans différentes plages angulaires et à différentes distances du drone 10.

L'ensemble optronique 32 comprend essentiellement une pluralité de caméras 34, un plateau 35 de support des caméras, et une articulation 36 gyroscopique stabilisée (représentée ici schématiquement) qui est disposée entre la surface supérieure 28b de l'embase 28 et une surface inférieure du plateau 35.

Les caméras 34 sont réparties ici de manière régulière sur la circonférence d'une surface supérieure du plateau 35 de support. Les caméras 34 sont ici au nombre de sept. Bien entendu, il est également envisageable de prévoir un nombre plus ou moins important de caméras. L'articulation 36, connue en soi, permet de conserver un bon centrage du plateau 35 lors des mouvements de houle. L'articulation 36 gyroscopique peut par exemple comprendre deux axes et permettre de compenser des amplitudes allant jusqu'à 25° de roulis ou de tangage.

Le dispositif d'observation 24 comprend également une unité centrale (non représentée). L'unité centrale est montée ici sur la face supérieure du plateau 35 de support au voisinage des caméras 34. L'unité centrale comporte tous les moyens matériels et logiciels permettant de commander le fonctionnement des caméras 34 de l'ensemble optronique 32.

De manière à permettre la détermination de la position du système 14 de surveillance, celui-ci comprend encore un capteur 40 de cap par exemple magnétique monté ici sur une face supérieure d'un plateau 38 additionnel supérieur. Le plateau 38 supérieur est fixé sur le plateau 35 de support par l'intermédiaire d'entretoises (non référencées). Il est situé axialement au dessus des caméras 34. Le capteur 40 est donc rapporté sur le plateau 35 de support, via le plateau 38 supérieur. Il est ainsi éloigné axialement de l'articulation 36 gyroscopique qui peut comprendre des sources de champs électromagnétiques.

L'ensemble optronique 32 permet d'observer une première zone à une distance relativement proche du drone 10 et sur 360°, et au moins une seconde zone plus éloignée du drone dans un secteur angulaire réduit.

En effet, dans un premier mode de surveillance, l'unité centrale commande l'ensemble des caméras 34. On obtient donc une surveillance sur 360°. Dans un second mode, l'unité centrale commande seulement une des caméras 34, ce qui permet par exemple de surveiller une plage angulaire réduite, de l'ordre de 60°. Bien entendu, le nombre de caméras 34 utilisées dans le second mode d'exploitation peut varier en fonction de la plage angulaire à observer. L'unité centrale de gestion peut également commander les caméras 34 de manière à permettre une surveillance selon d'autres modes de fonctionnement, c'est à dire sur des plages angulaires et à des distances différentes du drone 10.

Pour permettre une observation des zones situées à différentes distances du drone 10, les optiques des caméras 34 sont choisies en fonction de la zone à observer qui est la plus éloignée du drone 10 et sont commandées ensuite par l'unité de contrôle en fonction de la distance à laquelle se situe la zone à surveiller. A cet égard, les caméras 34 sont toutes commandées lorsque la surveillance doit s'exercer sur 360°, et seulement une ou un nombre restreint de caméras 34 sont commandées pour la surveillance d'une plage angulaire réduite.

Avec un tel dispositif 24 d'observation, on conçoit aisément qu'il est possible d'observer indépendamment différentes plages angulaires, sans qu'il soit nécessaire de prévoir des opérations de montage de caméras supplémentaires.

Ainsi, le dispositif d'observation 24 peut assurer une surveillance suivant différents modes d'exploitation sans qu'il soit nécessaire de prévoir des caméras additionnelles, ou encore des changement d'optiques des caméras 34.

Pour limiter le risque d'intrusion d'agents polluants extérieurs au niveau des caméras 34 et de l'unité centrale, le dispositif 24 d'observation comprend encore un capot 42 de protection. Il est réalisé en matière transparente ou translucide, et est avantageusement obtenu par moulage d'une matière synthétique, par exemple du polyméthacrylate de méthyle (PMMA) ou encore du polycarbonate (PC). Le capot 42 de protection présente une forme générale arrondie en forme de dôme. Il est rapporté sur l'embase 28 de fixation.

En se référant de nouveau aux figures 1 et 2, les moyens de transmission 26 du système 14 sont pourvus essentiellement d'un coffret de transmission 50 à l'intérieur duquel se trouve un radio-modem et d'une antenne 54 en vue de la transmission des images obtenues par l'ensemble optronique 32 à un centre de traitement prévu à cet effet pour leur analyse. Ce centre de traitement peut par exemple être situé sur le navire de surface à partir duquel les tirs de projectiles sont émis, ou encore à terre.

Le coffret de transmission 50 est fixé à l'extrémité supérieure du mât 16, par tout moyen approprié, et permet également le montage du dispositif d'observation 24. En effet, l'embase 28 de fixation est rapportée sur l'extrémité supérieure du coffret de transmission 50. En d'autres termes, celui-ci est intercalé entre l'extrémité supérieure du mât 16 et la surface inférieure 28a de l'embase 28 de fixation du dispositif d'observation 24. Avec le coffret de transmission supportant le dispositif d'observation 24, on obtient ainsi un ensemble autonome nécessitant uniquement une source de tension pour pouvoir fonctionner. En outre, cet ensemble peut être aisément démonté du mât 16 pour être utilisé sur une autre embarcation navale, ou sur un support flottant en mer fixe ou non, ou encore à terre.

L'antenne 54 est située à l'extrémité du capot 42 de protection, par exemple en étant vissée sur celui-ci.

Comme on le conçoit aisément, le dispositif 24 d'observation peut être considéré indépendamment du mât 16. Dès lors, dans d'autres modes de réalisation du drone 10, il est possible de prévoir d'autres types de moyens pour le support du système 14 d'observation et de transmission d'images, et plus particulièrement du dispositif 24 d'observation.

Afin de pouvoir permettre une télé-opération du drone 10, celui-ci comprend également des antennes 52 et 56, une caméra 60 de navigation fixée sur le mât 16 et un radio-modem 62 de transmission monté sur ledit mât 16 entre les antennes de transmission 52 et 56.

Les antennes 52 et 56 sont disposées sur le mât 16 par l'intermédiaire d'articulations 52a et 56a montées à rotation sur celui-ci. Les antennes 52 et 56 sont montées à rotation à l'extrémité libre des articulations 52a et 56a. Les antennes 52 et 56 sont disposées dans un même plan radial, en considérant l'axe 18 du mât 16. L'antenne 56 sert à recevoir à distance les ordres d'un opérateur destinés à l'unité de commande 15b qui gère les mouvements du drone. L'antenne 52 sert quant à elle à renvoyer à distance les images de la caméra 60 de navigation.

Les articulations 52a et 56a des antennes 52 et 56 sont ici agencées pour permettre un passage d'une position déployée, comme cela est illustré sur la figure 1, dans laquelle elles s'étendent essentiellement perpendiculairement par rapport au mât 16, à une position repliée, comme cela est illustré sur la figure 2.

Dans la position repliée, les articulations 52a et 56a des antennes 52 et 56 du dispositif d'observation 24 s'étendent le long du mât 16, de manière à obtenir un mât présentant un faible encombrement.

La caméra 60 de navigation est orientée vers le bas afin que la proue du drone 10 et l'horizon soient dans son champ de vision. Elle peut être montée sur le mât 16 par tout moyen approprié.

Le radio-modem 62 de transmission permet, quant à lui, la transmission au centre de traitement des images de la caméra 60 afin de réaliser un asservissement du drone 10 basé sur la vision de ces images, et par une action sur les moyens de propulsion 15a, via l'unité de commande 15b. En variante, l'unité de commande peut également permettre une commande automatique de la trajectoire du drone 10.

Grâce à l'invention, on obtient un drone 10 naval de surface qui comprend un unique mât 16 amovible pour le support du système 14 d'observation et de transmission d'images, ce qui permet notamment d'obtenir un drone économique.

Par ailleurs, le drone 10 peut être obtenu à partir d'une embarcation légère de type Zodiac®. En effet, il est possible à partir d'une telle embarcation, de rajouter le mât 16 équipé du système 14 d'observation et de transmission d'images, et d'obtenir ainsi un drone pour des campagne d'essais en mer. Ensuite, en démontant le mât 16, l'embarcation est de nouveau apte à être utilisée pour un transport de personnes ou d'équipements.

## Revendications

1. Système d'observation et de transmission d'images, notamment pour drone naval de surface, le système comprenant un dispositif d'observation (24) pourvu d'un plateau (35) de support, d'un ensemble optronique (32) qui comporte une pluralité de caméras (34) montées sur le plateau (35) de support, et d'une unité centrale de gestion de l'ensemble optronique (32), **caractérisé en ce que** l'unité centrale de gestion est apte à commander, dans un premier mode de surveillance, l'ensemble des caméras (34) pour obtenir une surveillance sur 360° à une première distance du système, et apte à commander, dans un second mode de surveillance, un nombre réduit de caméras (34) pour obtenir une surveillance sur une plage angulaire réduite à une seconde distance du système.

2. Système selon la revendication 1, dans lequel les caméras (34) sont circonférentiellement régulièrement réparties sur le plateau (35) de support.

3. Système selon la revendication 1 ou 2, dans lequel les caméras (34) sont montées fixement sur le plateau (35) de support.

4. Système selon l'une quelconque des revendications précédentes, dans lequel le dispositif d'observation (24) comprend une embase (28) de fixation et une articulation (36) gyrostabilisée disposée entre l'embase de fixation et le plateau (35) de support.

5. Système selon la revendication 4, dans lequel le dispositif d'observation (24) est pourvu en outre d'un capot de protection (42) translucide monté sur l'embase (28) de fixation.

6. Système selon l'une quelconque des revendications précédentes, dans lequel l'unité centrale de gestion de l'ensemble optronique (32) est montée sur le plateau de support (35).

7. Système selon l'une quelconque des revendications précédentes, comprenant un coffret de transmission (50) supportant le dispositif d'observation (24) et apte à permettre le montage du système sur un élément extérieur.

8. Système selon l'une quelconque des revendications précédentes, dans lequel le dispositif d'observation (24) comprend un capteur (40) de cap magnétique décalé axialement par rapport aux caméras (34), du côté opposé au plateau (35) de support.

9. Système selon l'une quelconque des revendications précédentes, dans lequel le dispositif d'observation (24) comprend au moins une antenne de transmission de transmission apte à être déployée.

10. Système selon l'une quelconque des revendications précédentes, comprenant une caméra (60) de navigation destinée à être montée sur un moyen de support du système d'observation et de transmission d'images.

11. Drone naval de surface pourvu :
- d'un corps (12),
- d'un système (14) d'observation et de transmission d'images, et
- d'un moyen de support dudit système d'observation et de transmission d'images,
**caractérisé en ce que** le système (14) d'observation et de transmission d'images comprend un dispositif d'observation (24) pourvu d'un plateau (35) de support, d'un ensemble optronique (32) qui comporte une pluralité de caméras (34) montées sur le plateau (35) de support, et d'une unité centrale de gestion de l'ensemble optronique (32), dans lequel l'unité centrale de gestion est apte à commander, dans un premier mode de surveillance, l'ensemble des caméras (34) pour obtenir une surveillance sur 360° à une première distance du système, et apte à commander, dans un second mode de surveillance, un nombre réduit de caméras (34) pour obtenir une surveillance sur une plage angulaire réduite à une seconde distance du système.

12. Drone selon la revendication 11, dans lequel le moyen de support est constitué par un mât (16) monté sur le corps (12).

13. Procédé d'observation et de transmission d'images, notamment à partir d'un drone naval de surface, dans lequel on utilise une pluralité de caméras montées sur un plateau de support, **caractérisé en ce qu'**on commande, dans un premier mode de surveillance, l'ensemble des caméras pour obtenir une surveillance sur 360° à une première distance du système, et **en ce qu'**on commande, dans un second mode de surveillance, un nombre réduit de caméras pour obtenir une surveillance sur une plage angulaire réduite à une seconde distance du système.
